Europäisches Patentamt

European Patent Office

Office européen des brevets

(11) Veröffentlichungsnummer: **0 505 882 A1**

## (12) EUROPÄISCHE PATENTANMELDUNG

(21) Anmeldenummer: **92104521.7**

(22) Anmeldetag: **16.03.92**

(51) Int. Cl.5: **B01D 53/36**

(30) Priorität: **28.03.91 DE 4110333**

(43) Veröffentlichungstag der Anmeldung:
**30.09.92 Patentblatt 92/40**

(84) Benannte Vertragsstaaten:
**DE ES GB IT NL**

(71) Anmelder: **SIEMENS AKTIENGESELLSCHAFT**
**Wittelsbacherplatz 2**
**W-8000 München 2(DE)**

(72) Erfinder: **Balling, Lothar, Dipl.-Ing.**
**Marienstrasse 6**
**W-8510 Fürth(DE)**

(54) **Verfahren und Einrichtung zur katalytischen Reduktion.**

(57) Das Verfahren zur katalytischen Reduktion bedient sich eines Reduktionsmittels (M, $NH_3$) und eines Katalysators (2; 2A, 2B). Das Reduktionsmittel (M, $NH_3$) wird erfindungsgemäß, und zwar unvermischt mit dem zu reduzierenden Stoff (R), im Katalysator (2; 2A, 2B) zur Reduktion des Stoffes (R) bereitgestellt. Die Einrichtung zur katalytischen Reduktion ist erfindungsgemäß durch eine Zuleitung (8, 16, 10, 18; 48, 50; 63, 64; 70, 78; 81, 88; 98, 99) gekennzeichnet, mit der das Reduktionsmittel (M) weitgehend unvermischt mit dem zu reduzierenden Stoff (R) in den Katalysator (2; 2A, 2B) eingebracht werden kann.

FIG 2

EP 0 505 882 A1

Die Erfindung bezieht sich auf ein Verfahren und eine Einrichtung zur katalytischen Reduktion eines Stoffes mit Hilfe eines Reduktionsmittels und eines Katalysators. Die Erfindung eignet sich insbesondere zur katalytischen Reduktion von Stickoxiden geringer Konzentration in Rauchgasen nach dem SCR-Verfahren.

Bei der katalytischen Reduktion von Stickoxiden, zum Beispiel nach dem SCR-Verfahren ("$NO_x$ Reduction with Plate-type and Honeycomb-type Catalytic Converters", Siemens AG, Berlin, München, Bestellnummer: A19100-U311-A106-X-7600, April 1988) und auch bei allen anderen katalytischen Verfahren, bei denen ein Reduktionsmittel (oder auch ein Oxidationsmittel) zu dem zu reduzierenden Stoff zugemischt wird, aber nicht im Überschuß zugegeben werden kann, zum Beispiel aus Gründen der Schlupfproblematik, entsteht ein statistisches Problem. Bei geringer Konzentration des Reduktionsmittels oder auch des zu reduzierenden Stoffes, zum Beispiel $NO_x$ im Rauchgas, verändert sich die Reaktionsordnung. Denn die beteiligten Gasmoleküle treffen sich nun zum Teil nicht gleichzeitig an einer aktive Katalysatorteilfläche. Auch durch eine wesentliche Erhöhung des Katalysatorvolumens kann die Wahrscheinlichkeit, daß dort ein Molekül des Reduktionsmittels auf ein Molekül des zu reduzierenden Stoffes trifft, nicht wesentlich erhöht werden. Aus diesem Grund waren bisher Umwandlungs- oder Reduktionsgrade von nur maximal 95 % auf Dauer bei technischen Großanlagen zu erreichen.

Auf dem Gebiet der $DeNO_x$-Katalysatoren nach dem SCR-Verfahren waren hohe Reduktionsgrade nur durch Optimierung der Anström- und Verteilungsbedingungen für das Reduktionsmittel Ammoniak ($NH_3$) möglich. Reduktionsgrade bis 94 % wurden bisher nur durch wesentliche Aufwendungen in der $NH_3$-Verteilung und durch Überdimensionierung des SCR-Katalysators erreicht. Das heißt, man suchte danach, das Reduktionsmittel $NH_3$ möglichst gleichmäßig im Rauchgasstrom zu verteilen, was mit der Bereitstellung entsprechend kostspieliger Einrichtungen verbunden war.

Aufgabe der vorliegenden Erfindung ist es, ein Verfahren und eine Einrichtung der eingangs genannten Art bereitzustellen, mit denen auch bei geringer Konzentration des Reduktionsmittels und/oder des zu reduzierenden Stoffes ein hoher Reduktionsgrad erzielbar ist, wobei der technische Aufwand sich in Grenzen halten soll. Verfahren und Einrichtung sollen sich insbesondere für die $DeNO_x$-Reduktion eines Rauchgases nach dem SCR-Verfahren eignen, so daß die besagten hohen Aufwendungen für die $NH_3$-Verteilung und die Überdimensionierung des Katalysators entfallen können.

Diese Aufgabe wird bei einem Verfahren der eingangs genannten Art erfindungsgemäß dadurch gelöst, daß das Reduktionsmittel - unvermischt mit dem zu reduzierenden Stoff - im Katalysator zur Reduktion des Stoffes bereitgestellt wird.

Die genannte Aufgabe wird bezüglich einer Einrichtung der eingangs genannten Art erfindungsgemäß dadurch gelöst, daß eine Zuleitung vorgesehen ist, mit der das Reduktionsmittel unvermischt mit dem zu reduzierenden Stoff in den Katalysator einbringbar ist.

Vorteilhafte Ausgestaltungen der Erfindung sind in den Unteransprüchen gekennzeichnet.

Die Erfindung beruht dabei auf der Überlegung, daß das Reduktionsmittel (z.B. Ammoniak $NH_3$) nach Möglichkeit nicht mit dem zu reduzierenden Stoff (z.B. dem $NO_x$ im Rauchgas) vermischt wird, sondern direkt im Katalysator vorhanden sein sollte.

Die konsequenteste Durchführung dieser Überlegung besteht darin, daß das Reduktionsmittel direkt in den Katalysator eingegeben wird. Es kann dort am Katalysatormaterial haften oder adsorbiert werden.

Ausführungsformen der Erfindung werden im folgenden anhand von elf Figuren näher erläutert. Es zeigen:

FIG 1     eine erste Ausführungsform, bei der zwei Teilkatalysatoren im Wechsel betrieben werden;

FIG 2     eine zweite Ausführungsform, bei der ein drehbarer Katalysator durch zwei voneinander getrennte Kammer hindurchgedreht wird;

FIG 3     einen Schnitt durch die Einrichtung von Figur 2;

FIG 4     eine Tabelle zur Erläuterung der Funktion der Ausführungsform nach den Figuren 2 und 3;

FIG 5     eine dritte Ausführungsform, bei der ein Reduktionsmittel durch eine katalytische Keramik-Membrane hindurch einem zu reduzierenden Stoff zur Verfügung gestellt wird;

FIG 6     eine vierte Ausführungsform mit parallelen hohlen Keramikplatten;

FIG 7     eine seitliche Ansicht der Ausführungsform nach Figur 6;

FIG 8     eine fünfte Ausführungsform mit zwei Bündeln paralleler Keramik-Rohre;

FIG 9     eine Seitenansicht der Ausführungsform nach Figur 8;

FIG 10     ein Netz keramischer Kanäle, die von einem Reduktionsmittel beaufschlagt sind, in einem zu reduzierenden Gasstrom; und

FIG 11     eine vergrößerte Aufsicht auf ein Detail von Figur 10.

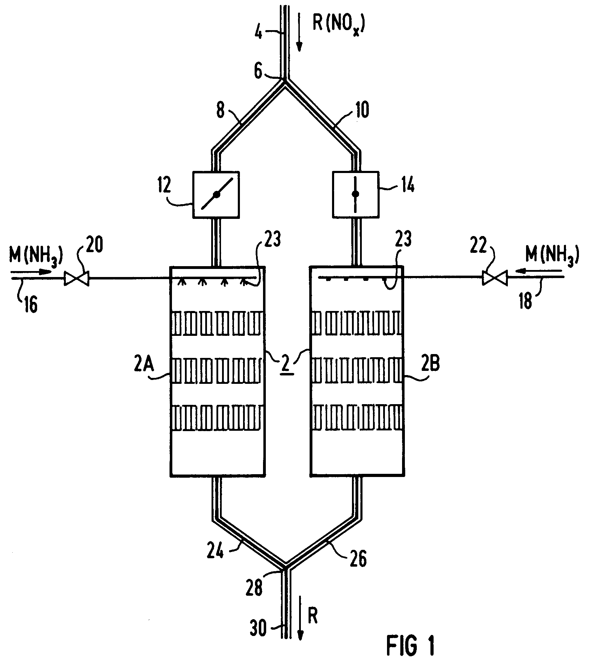

Nach Figur 1 umfaßt ein Katalysator 2 zwei Teilkatalysatoren 2A, 2B in angepaßten Reaktorgehäusen. In beide Teilkatalysatoren 2A, 2B kann wahlweise ein zu reduzierender Stoff R, im vorliegenden Fall ein mit Stickoxid $NO_x$ beladenes Rauchgas, oder ein gasförmiges Reduktionsmittel M, im vorliegenden Fall Ammoniak $NH_3$, eingeleitet werden. Mit anderen Worten: Die beiden Teilkatalysatoren 2A, 2B werden im Wechsel betrieben; dabei wird jeweils abwechselnd der eine mit dem Reduktionsmittel M und der andere mit dem zu reduzierenden Stoff R beschickt. Dann findet abwechselnd in den beiden Teilkatalysatoren eine $NH_3$-Adsorption und anschließend eine $NO_x$-Reduktion statt. Die Einrichtung umfaßt eine Zuleitung 4 für den zu reduzierenden Stoff R, einen Teiler 6 und zwei daran anschließende Eingangsleitungen 8, 10, die mit Umschaltklappen 12 bzw. 14 versehen sind. Die beiden Umschaltklappen 12, 14 bilden eine erste Umschalteinrichtung, mit der der zu reduzierende Stoff R wahlweise zum ersten oder zum zweiten Teilkatalysator 2A bzw. 2B durchgeschaltet werden kann. Weiterhin sind zwei Zuleitungen 16, 18 für das Reduktionsmittel M vorgesehen, die über je ein Ventil 20 bzw. 22 in den Eingangsteil des betreffenden Teilkatalysators 2A, 2B führen und dort mit Ausströmöffnungen 23 versehen sind. Die beiden Ventile 20, 22 bilden eine zweite Umschalteinrichtung. Die Ausgangsleitungen 24, 26 der beiden Teilkatalysatoren 2A bzw. 2B führen über eine Verbindungsstelle 28 zu einer gemeinsamen Ausgangsleitung 30.

In der in Figur 1 gezeigten ersten Betriebsstellung ist davon ausgegangen, daß die Umschaltklappe 12 zu, die Umschaltklappe 14 dagegen auf ist, und daß das Ventil 20 geöffnet, das Ventil 22 dagegen geschlossen ist. Bei dieser Betriebsstellung wird der erste Teilkatalysator 2A mit mit gasförmigem $NH_3$ beladener Luft beaufschlagt; auf diese Weise wird das $NH_3$ im Teilkatalysator 2A adsorbiert. Das heißt, der Teilkatalysator 2A wird so mit $NH_3$ beladen. Gleichzeitig wird der zweite Teilkatalysator 2B mit von $NO_x$ beladenem Rauchgas R durchströmt. Dabei reagiert das $NO_x$ am Teilkatalysator 2B mit dem bereits früher hier adsorbierten $NH_3$. Hier findet also eine katalytische Reaktion statt. Nach der Abreaktion des $NH_3$ wird die Einrichtung in die nicht gezeigte zweite Betriebsstellung umgeschaltet.

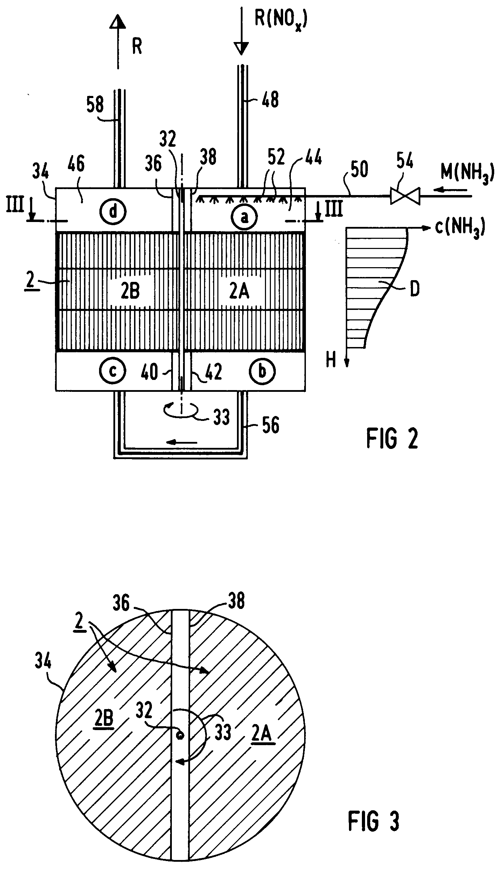

Nach Figur 2 und 3 ist eine Einrichtung zur katalytischen Reduktion vorgesehen, die einen Katalysator 2 in Zylinderform umfaßt. Dieser Katalysator 2 wird im Betrieb durch einen (nicht gezeigten) Antrieb um eine vertikale Achse 32 gedreht. Die Drehbarkeit des Katalysators 2 ist durch einen gekrümmten Pfeil 33 angedeutet. Der Katalysator 2 ist dabei mittig in einem zylindrischen Gehäuse 34 untergebracht. Der Katalysator 2 besteht im vorliegenden Fall aus drei Lagen, von denen jede als Platten- oder Bienenwaben-Katalysator ausgebildet sein kann. Von Bedeutung ist nun, daß der Raum oberhalb und unterhalb des Katalysators 2 im Gehäuse 34 mit Hilfe von längs verlaufenden Dichtungen 36, 38 sowie 40, 42 in eine erste Kammer 44 bzw. eine zweite Kammer 46 unterteilt ist. Durch die Rotation bewegt sich jedes Teil des Katalysators 2 abwechselnd zwischen der ersten und der zweiten Kammer 44, 46. An die erste Kammer 44 sind eingangsseitig eine Zuleitung 48 für den zu reduzierenden Stoff R, in diesem Fall wiederum mit $NO_x$ beladenes Rauchgas, und eine Zuleitung 50 mit einer Vielzahl von Eindüsöffnungen 52 und mit einem Absperrventil 54 für das Reduktionsmittel M angeschlossen. Bei diesem Reduktionsmittel M kann es sich auch vorliegend wieder um gasförmiges Ammoniak $NH_3$ handeln, das mit Mischluft zugeführt wird. Der Ausgang der ersten Kammer 44 ist über eine Verbindungsleitung 56 an den Eingang der zweiten Kammer 46 angeschlossen. Der Ausgang der zweiten Kammer 46 wiederum ist mit einer Ausgangsleitung 58 verbunden, die beispielsweise zu einem Kamin führt.

In den oberen Teil der ersten Kammer 44 wird gleichzeitig mit $NO_x$ beladenes Rauchgas R und Reduktionsmittel M eingebracht. Dies führt dazu, daß in dem jeweils in der ersten Kammer 44 sich befindenden Teil 2A des Katalysators 2 ein Adsorptions- und ein Reaktionsvorgang stattfindet. Die Mengec des adsorbierten $NH_3$ über der Höhe H ist schematisch in Figur 2 im Diagramm D dargestellt. Demnach wird der in der ersten Kammer 44 befindliche Teilkatalysator 2A zumindest im oberen Teil hoch mit $NH_3$ beladen. Dieser hoch beladene Teilkatalysator 2A wird sowohl in der ersten Kammer 44 als auch später in der zweiten Kammer 46 mit der relativ niedrigen $NO_x$-Konzentration im Rauchgas R in Kontakt gebracht. Mit anderen Worten: In der zweiten Kammer 46 spielt sich im hier befindlichen Katalysatorteil 2B eine Reaktion ab. Denn das Rauchgas R strömt mit dem verbleibenden $NO_x$ über die Verbindungsleitung 56 in die zweite Kammer 46, so daß hier die katalytische Reaktion dieses $NO_x$ mit dem hier im Katalysatorteil 2B adsorbierten $NH_3$ stattfinden kann. Das von $NO_x$ befreite Rauchgas R verläßt die zweite Kammer 46 über die Ausgangsleitung 58.

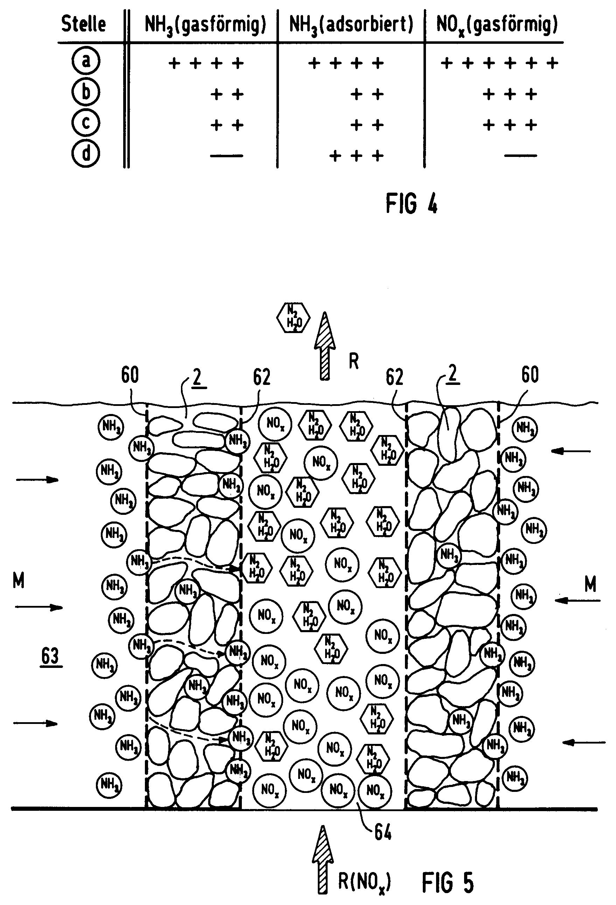

Aus Figur 4 ist ersichtlich, welche Konzentrationen an den einzelnen Stellen a, b der ersten Kammer 44 sowie d, c der zweiten Kammer 46 vorherrschen. Die Konzentration ist dabei für $NH_3$ - (gasförmig), $NH_3$ (adsorbiert) sowie $NO_x$ - (gasförmig) jeweils durch die Anzahl der Kreuze markiert. Demnach ist beispielsweise an der Stelle c beim Eingang in die zweite Kammer 46 noch etwas $NH_3$ im Rauchgas R vorhanden. Dieses trifft im dort befindlichen Teilkatalysator 2B auf eine gewisse Menge adsorbiertes $NH_3$. An dieser Stelle

c ist im Rauchgas R auch noch eine gewisse Konzentration von gasförmigem Stickoxid $NO_x$ vorhanden. Nach dem Durchgang durch diesen Teilkatalysator 2B ist, wie sich aus Stelle d ergibt, das $NH_3$ aus dem Gasstrom R praktisch vollkommen verschwunden. Ebenso ist das schädliche $NO_x$ spätestens hier in diesem Teilkatalysator 2B nach dem SCR-Verfahren in unschädliche Substanzen umgewandelt.

In Figur 5 ist eine Ausführungsform der Einrichtung dargestellt, bei der der Katalysator 2 als Membranwand ausgebildet ist. Es kann sich dabei um eine gerade Wand handeln; speziell liegt diese Membranwand hier in Form eines Hohlzylinders vor. Bei dieser Membranwand kann es sich vorteilhafterweise um eine katalytische Keramik handeln. In Figur 5 ist dargestellt, daß der Katalysator 2 dabei aus einer Anzahl aneinanderliegender größerer Partikel, zwischen denen sich Zwischenräume befinden, bestehen kann. Sollte es sich dabei um ein gröberes Granulat handeln, kann sowohl die Außenseite 60 als auch die Innenseite 62 des Katalysators 2 durch je ein Netz gebildet sein. Handelt es sich um eine weitgehend homogene feinere Keramik, so sind die Seiten 60, 62 durch feinporige Oberflächen gekennzeichnet.

Wichtig ist nun, daß das Reduktionsmittel M direkt in den Katalysator 2 eingespeist wird und dort in adsorbierter Form für die katalytische Reaktion zur Verfügung steht. Von Bedeutung ist auch, daß das Reduktionsmittel $NH_3$ von selbst nachdiffundiert.

Nach Figur 5 wird nämlich das mit Stickoxid $NO_x$ belastete Rauchgas R von unten in den zentralen Kanal 64 des hohlzylindrischen Katalysators 2 eingespeist. Die Außenseite 60 des Katalysators 2 wird dagegen von einer Zuleitung oder einem Raum 63 aus dem Reduktionsmittel M ausgesetzt. Diese wird also von außen zugespeist. Die $NH_3$-Moleküle diffundieren aufgrund des herrschenden Partialdruck- oder Konzentrationsgefälles in die Membranwand 2 ein. Das $NH_3$ wird innerhalb der Keramik, aber auch an deren Seite 62, gebunden. An den dort vorhandenen aktiven Katalysatorzentren steht das $NH_3$ für die Reduktion des vorbeiströmenden $NO_x$ zur Verfügung. Um den Vorgang des Wanderns zu beschleunigen, kann der Druck auf der Außenseite 60 größer sein als auf der Innenseite 62. Die Reduktion des $NO_x$ führt beispielsweise zur Bildung von $N_2$- und $H_2O$-Molekülen. Das von $NO_x$ befreite Rauchgas R verläßt den Katalysator 2 samt den Umwandlungsprodukten $N_2$ und $H_2O$ nach oben.

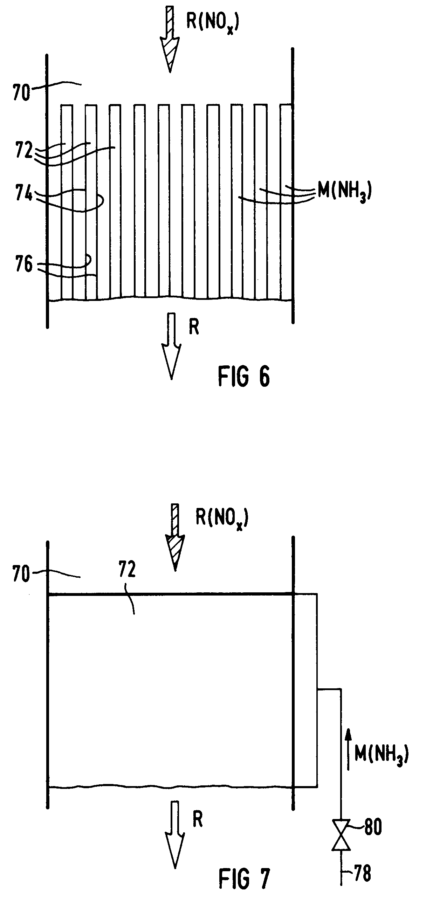

Auch in Ausführungsbeispielen nach den Figuren 6 bis 11 besteht der zur $NO_x$-Reduktion verwendete Katalysator 2 jeweils aus einer porösen Keramik, deren Poren und Azizität dazu geeignet sind, das Reduktionsmittel M (hier wiederum Ammoniak $NH_3$) sowohl durchzulassen, als auch zu speichern.

Nach Figuren 6 und 7 ist ein Strömungskanal 70 vorgesehen, der von mit $NO_x$ beladenem Rauchgas R durchströmt wird. Innerhalb dieses Kanals 70 ist eine Anzahl von Taschen oder hohlen Platten 72 angeordnet, die parallel zueinander gegen den Rauchgasstrom ausgerichtet sind. Diese Platten 72 sind aus der erwähnten Keramik hergestellt. Die Außenseiten 74 sind dem Rauchgas R ausgesetzt, und die Innenseiten 76 sind mit dem Reduktionsmittel $NH_3$ beaufschlagt. Zu diesem Zweck sind die hohlen Platten 72 an eine Versorgungsleitung 78 über ein Ventil 80 angeschlossen.

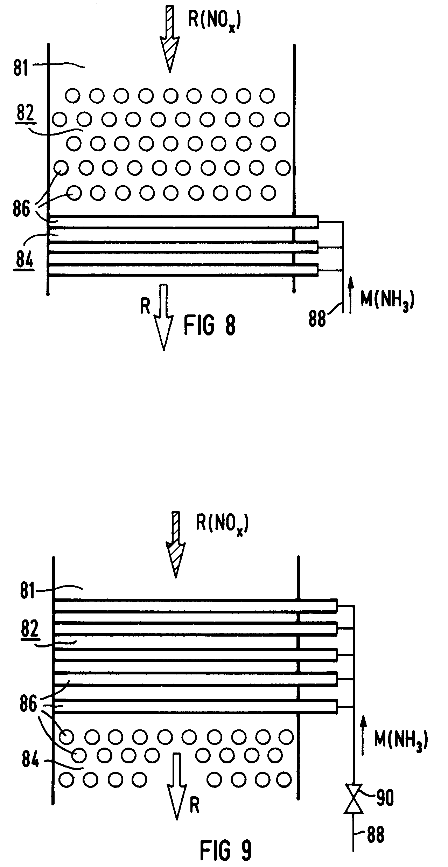

Nach Figuren 8 und 9 sind in einem Kanal 81 ein erstes und ein zweites Bündel 82 bzw. 84 von runden Keramikrohren 86, die endseitig verschlossen sind, angeordnet.

Innerhalb jedes Bündels 82, 84 sind die Rohre 86 parallel zueinander ausgerichtet. Beide Bündel 82, 84 stehen senkrecht aufeinander. Auch hier sind die Keramikrohre 86 innen vom Reduktionsmittel M, d.h. von Ammoniak $NH_3$, und außen vom zu reduzierenden Stoff R beaufschlagt. Die einzelnen endseitig geschlossenen Hohlzylinder oder Keramikrohre 86 sind an eine Versorgungsleitung für $NH_3$, in der sich ein Stellventil 90 befindet, angeschlossen. Diese Versorgungsleitung 88 kann auch hier wieder unter einem leichten Überdruck gehalten sein.

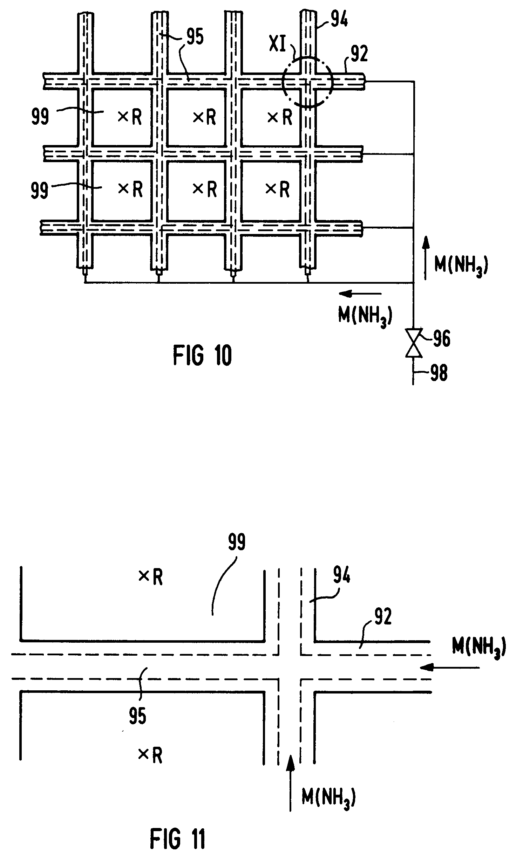

Aus den Figuren 10 und 11 ist ersichtlich, daß die katalytischen Membranwände als wabenförmiges Netz ausgebildet sein können. Innerhalb der einzelnen Längs- und Querwände 92, 94 befinden sich dünne Kanäle 95, beispielsweise von weniger als 1 mm Kanalbreite, die von dem Reduktionsmittel M beaufschlagt sind. Dieses Reduktionsmittel M wird über ein Ventil 96 sowohl für die Quer- als auch für die Längskanäle 95 von einer Versorgungsleitung 98 bereitgestellt. Der Abstand der einzelnen Stege oder Wände 92, 94 kann beispielsweise 5 mm betragen. In den Figuren 10 und 11 strömt das mit $NO_x$ belastete Rauchgas R senkrecht zur Papierebene durch die von den Seitenwänden 92, 94 gebildeten Strömungskanäle 99. Das $NO_x$ reagiert dabei mit dem jeweils an der Innenseite der Katalysator-Membranwände 92, 94 zur Verfügung gestellten $NH_3$.

Es soll noch einmal angemerkt werden, daß bei den Ausführungsformen nach den Figuren 5 bis 11, in denen der Katalysator 2 aus Membranwänden gebildet ist, das Reduktionsmittel M durch einen entsprechenden Druck in das Katalysatormaterial gebracht werden kann. Auf der anderen Seite der Membranwand steht es dann für die ankommenden $NO_x$-Moleküle zur Reduktion zur Verfügung. Durch Verwendung von geeigneten Membranwänden und durch einen den Bedürfnissen angepaßten Druck des Reduktionsmittels M ist es möglich, die Reduktion unabhängig von der Konzentration von NO$_x$ und ohne Schlupf des Reduktionsmittels M praktisch vollständig herbeizuführen.

Abschließend soll auch noch erwähnt werden, daß sich Einrichtungen und Verfahren nach der Erfindung insbesondere für die Reduktion, aber auch für die Oxidation von Spurengasen (z.B. NO, CO, CH$_4$, NH$_3$, Kohlenwasserstoffe, etc.) in kleineren Systemen und in vorwiegend staubfreien Gasen eignen. Hervorzuheben ist auch noch einmal die in den Figuren 6 bis 11 dargestellte Verwendung von Katalysatorwänden oder Katalysatorrohren im Kreuzstrom mit dem zu reinigenden Gasstrom R, wobei eine Kombination als Wärmetauscher denkbar ist.

**Patentansprüche**

1. Verfahren zur katalytischen Reduktion eines Stoffes (R) mit Hilfe eines Reduktionsmittels (M) und eines Katalysators (2; 2A, 2B)**, dadurch gekennzeichnet,** daß das Reduktionsmittel (M) - weitgehend unvermischt mit dem zu reduzierenden Stoff (R) - im Katalysator (2; 2A, 2B) zur Reduktion des Stoffes (R) bereitgestellt wird.

2. Verfahren nach Anspruch 1, **dadurch gekennzeichnet,** daß das Reduktionsmittel (M) im Katalysator (2; 2A, 2B) adsorbiert zur Reduktion bereitgestellt wird (Figur 1).

3. Verfahren nach Anspruch 2, **dadurch gekennzeichnet,** daß der Katalysator (2) in zwei Teilkatalysatoren (2A, 2B) unterteilt ist, von denen abwechselnd der eine mit dem Reduktionsmittel (M) und der andere mit dem zu reduzierenden Stoff (R) beschickt wird (Figur 1).

4. Verfahren nach Anspruch 1, **dadurch gekennzeichnet,** daß dem Katalysator (2) oder einem Teil (2A, 2B) desselben eine gewisse Zeit lang gleichzeitig das Reduktionsmittel (M) und der zu reduzierende Stoff (R) und danach im wesentlichen nur noch der zu reduzierende Stoff (R) zugeführt wird (Figuren 2 bis 4).

5. Verfahren nach Anspruch 4, **dadurch gekennzeichnet,** daß der Katalysator (2) rotiert, daß fortlaufend einem anderen ersten Teil (2A) des Katalysators (2) gleichzeitig das Reduktionsmittel (M) und der zu reduzierende Stoff (R) zugeführt werden, und daß das von dem ersten Teil (2A) des Katalysators (2) abgegebene Gemisch aus dem Reduktionsmittel (M) und dem zu reduzierenden Stoff (R) fortlaufend einem anderen zweiten Teil (2B) des Katalysators (2) zugeleitet wird (Figuren 2 bis 4).

6. Verfahren nach Anspruch 1, **dadurch gekennzeichnet,** daß das Reduktionsmittel (M) direkt in den als Membranwand ausgebildeten Katalysator (2) eingespeist und durch Diffusion zur Reduktion des zu reduzierenden Stoffes (R) bereitgestellt wird (Figuren 5 bis 11).

7. Verfahren nach Anspruch 6, **dadurch gekennzeichnet,** daß das Reduktionsmittel (M) einer Seite (60; 76) des Katalysators (2) derart angeboten wird, daß es durch Diffusion durch den Katalysator (2) auf eine andere Seite (62; 74) desselben hindurchtritt, wobei diese andere Seite (62; 74) des Katalysators (2) in Kontakt mit dem zu reduzierenden Stoff (R) steht (Figur 5 bis 11).

8. Einrichtung zur katalytischen Reduktion eines Stoffes (R) mit Hilfe eines Reduktionsmittels (M) und eines Katalysators (2), **dadurch gekennzeichnet,** daß eine Zuleitung (8, 16, 10, 18; 48, 50; 63, 64; 70, 78; 81, 88; 98, 99) vorgesehen ist, mit der das Reduktionsmittel (M) weitgehend unvermischt mit dem zu reduzierenden Stoff (R) in den Katalysator (2; 2A, 2B) einbringbar ist.

9. Einrichtung nach Anspruch 8, **dadurch gekennzeichnet,** daß der Katalysator (2) in zwei Teilkatalysatoren (2A, 2B) unterteilt ist, die wechselweise an das Reduktionsmittel (M) und an den zu reduzierenden Stoff (R) anschaltbar sind (Figur 1).

10. Einrichtung nach Anspruch 9, **dadurch gekennzeichnet,** daß der Katalysator (2) in einen ersten und einen zweiten Teilkatalysator (2A, 2B) unterteilt ist, daß eine erste Umschaltvorrichtung (12, 14) vorgesehen ist, mit der der zu reduzierende Stoff (R) wahlweise zum ersten bzw. zum zweiten Teilkatalysator (2A, 2B) durchschaltbar ist, und daß eine zweite Umschalteinrichtung (20, 22) vorgesehen ist, mit der das Reduktionsmittel (M) wahlweise zum zweiten bzw. zum ersten Teilkatalysator (2A, 2B) durchschaltbar ist (Figur 1).

11. Einrichtung nach Anspruch 8, **dadurch gekennzeichnet,** daß der Katalysator (2) rotierbar derart angeordnet ist, daß er sich zwischen einer ersten und einer zweiten Kammer (44, 46) bewegt, daß an die erste Kammer (44) eingangsseitig eine Zuleitung (48) für den zu reduzierenden Stoff (R) und eine Zuleitung (50) für das Reduktionsmittel (M) angeschlossen ist, daß der Ausgang der ersten Kammer (44) an den Eingang der zweiten Kammer (46) angeschlossen ist, und daß der Ausgang der zweiten Kammer (46) vorzugsweise mit einer Ausgangsleitung (58) verbunden ist (Figuren 2 bis 4).

12. Einrichtung nach Anspruch 8, **dadurch gekennzeichnet,** daß der Katalysator (2) als Membranwand ausgebildet ist, daß die eine Seite (60; 76) der Membranwand mit dem Reduktionsmittel (M) und daß die andere Seite (62; 74) der Membranwand mit dem zu reduzierenden Stoff (R) beaufschlagbar ist (Figuren 5 bis 11).

13. Einrichtung nach Anspruch 12, **dadurch gekennzeichnet,** daß die Membranwand eine Keramik ist (Figuren 5 bis 11).

14. Einrichtung nach Anspruch 12 oder 13, **dadurch gekennzeichnet,** daß die Membranwand als Hohlkörper, insbesondere als Hohlzylinder, ausgebildet ist (Figur 5).

15. Einrichtung nach Anspruch 12 oder 13, **dadurch gekennzeichnet,** daß die Membranwand als eine hohle Platte (72) ausgebildet ist, die innen vom Reduktionsmittel (M) und außen vom zu reduzierenden Stoff (R) beaufschlagbar ist (Figuren 6 und 7).

16. Einrichtung nach Anspruch 15, **dadurch gekennzeichnet,** daß mehrere hohle Platten (72) vorgesehen sind, die - vorzugsweise parallel zueinander - in einem Kanal (70) angeordnet sind (Figuren 6 und 7).

17. Einrichtung nach Anspruch 12 oder 13, **dadurch gekennzeichnet,** daß die Membranwand als endseitig geschlossener Hohlzylinder (86) ausgebildet ist, der innen vom Reduktionsmittel (M) und außen vom zu reduzierenden Stoff (R) beaufschlagbar ist (Figuren 8 und 9).

18. Einrichtung nach Anspruch 17, **dadurch gekennzeichnet,** daß mehrere endseitig geschlossene Hohlzylinder (86) vorgesehen sind, die - vorzugsweise parallel zueinander - in einem Kanal (81) angeordnet sind (Figuren 8 und 9).

19. Einrichtung nach Anspruch 12 oder 13, **dadurch gekennzeichnet,** daß die Membranwand als wabenförmiges Netz (92, 94) ausgebildet ist (Figuren 10 und 11).

20. Einrichtung nach Anspruch 19, **dadurch gekennzeichnet,** daß das Netz (92, 94) dünne, vom Reduktionsmittel (M) beaufschlagbare Kanäle (95) umfaßt, wobei die Netzzwischenräume (99) vom zu reduzierenden Stoff (R) durchströmbar sind (Figuren 10 und 11).

21. Einrichtung nach einem der Ansprüche 12 bis 20, **dadurch gekennzeichnet,** daß der Druck auf der einen Seite (60, 76) der Membranwand (2) höher ist als auf der anderen Seite (62; 74) (Figuren 5 bis 11).

FIG 1

FIG 2

FIG 3

| Stelle | $NH_3$ (gasförmig) | $NH_3$ (adsorbiert) | $NO_x$ (gasförmig) |
|:---:|:---:|:---:|:---:|
| ⓐ | + + + + | + + + + | + + + + + + |
| ⓑ | + + | + + | + + + |
| ⓒ | + + | + + | + + + |
| ⓓ | — | + + + | — |

**FIG 4**

**FIG 5**

R(NO$_x$)

70

72

74

M(NH$_3$)

76

R

**FIG 6**

R(NO$_x$)

70

72

M(NH$_3$)

R

80

78

**FIG 7**

FIG 8

FIG 9

FIG 10

FIG 11

| | Europäisches Patentamt | **EUROPÄISCHER RECHERCHENBERICHT** | Nummer der Anmeldung |
|---|---|---|---|

EP    92 10 4521

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| P,X | EP-A-0 469 593 (HALDOR TOPSOE) 5. Februar 1992<br><br>* das ganze Dokument *<br>--- | 1,2,3,8, 9,10,11 | B01D53/36 |
| X | WO-A-8 704 947 (KRAFTANLAGEN)<br>* das ganze Dokument * | 1-3,8-11 | |
| A | | 5 | |
| A | WO-A-8 503 645 (SRM SVENSKA ROTOR MASKINER)<br>--- | | |
| A | WO-A-8 601 431 (KRAFTANLAGEN)<br>--- | | |
| P,A | DE-A-3 926 143 (DIDIER-WERKE) 18. April 1991<br><br>----- | | |
| | | | **RECHERCHIERTE SACHGEBIETE (Int. Cl.5 )**<br><br>B01D |

Der vorliegende Recherchenbericht wurde für alle Patentansprüche erstellt

| Recherchenort | Abschlußdatum der Recherche | Prüfer |
|---|---|---|
| DEN HAAG | 07 JULI 1992 | BOGAERTS M.L.M. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
.............................................................................
& : Mitglied der gleichen Patentfamilie, übereinstimmendes
    Dokument

EPO FORM 1503 03.82 (P0403)